Europäisches Patentamt

European Patent Office

Office européen des brevets

(19)

(11) Publication number:

**0 400 965**

**A2**

(12)

# EUROPEAN PATENT APPLICATION

(21) Application number: 90305832.9

(51) Int. Cl.⁵: **B01L 7/00**

(22) Date of filing: 29.05.90

A request for addition of a figure has been filed pursuant to Rule 88 EPC. A decision on the request will be taken during the proceedings before the Examining Division (Guidelines for Examination in the EPO, A-V, 2.2).

(30) Priority: **30.05.89 JP 63737/89**

(43) Date of publication of application:
**05.12.90 Bulletin 90/49**

(84) Designated Contracting States:
**DE FR GB SE**

(71) Applicant: **TAKARA SHUZO CO. LTD.**
**609 Takenaka-cho**
**Fushimi-ku, Kyoto-shi, Kyoto-fu(JP)**

(72) Inventor: **Kondo, Akihiro**
**Shibukawa 16, Terado-cho**
**Mukoh-shi, Kyoto-fu(JP)**
Inventor: **Kato, Yoshiyuki**
**2-4-6-203 Nishisakaidani-cho, Oharano**
**Nishikyo-Ku, Kyoto-shi Kyoto-fu(JP)**
Inventor: **Kato, Ikunoshin**
**1-1-150 Nanryo-cho**
**Uji-shi, Kyoto-fu(JP)**

(74) Representative: **Seaborn, George Stephen et al**
**c/o Edward Evans & Co. Chancery House**
**53-64 Chancery Lane**
**London WC2A 1SD(GB)**

(54) Reagent reactor.

(57) A reagent reactor comprising
a vial having an opening at one end thereof;
a supporting block, having a first heater element, for surrounding and supporting said vial in a substantially erected posture so that said opening of the vial is adjacent to the upper surface thereof and exposed to the outside thereabove;
a cover block for pressing against said supporting block under pressure and capable of sealing said opening of said vial including a fluid introducing tube projecting from said opening into said vial when the cover block is in the sealing position to the vial, a fluid discharging opening opposed to said opening when the cover block is in the sealing position to the vial, and a second heater element; and
a temperature control circuit for controlling said first and second heater elements so as to maintain the temperatures of the upper portion of said vial and the lower end surface of said cover block which contacts said opening of said vial more than the temperature of the main body of said vial when a reagent is added to a sample contained in said vial so as to allow reaction of the reagent with said sample and when the evaporation or the azeotropy of a reagent or a solvent is performed.

## REAGENT REACTOR

### Field of the Invention

The present invention relates to a reagent reactor and, more particularly, to an apparatus comprising blocks, for supporting and covering a reactor, provided with a novel temperature control mechanism.

### Prior Art

In order to obtain a product by repeating reactions of a reagent and a solvent which occur in a sample solution, it is necessary to carry out the following process.

(1) A reagent is supplied to a vial containing a sample solution.

(2) each reaction occurs in sealing the vial placed at a predetermined supporting position.

(3) After each reaction is completed, an inert gas such as nitrogen is fed under pressure through a fluid introducing tube preferably, connected to the vial at the supporting position, and a gas phase in the vial is sucked therefrom through a fluid discharging tube also preferably, connected to the vial to reduce the pressure therein. Thereby, excess reagents and solvents are removed from the vial by evaporation or an azeotropy. In addition, the gas phase in the vial is replaced by the inert gas.

Generally, when evaporation or an azeotropy is carried out by heating a vial, a vial supporting block having a heater for heating the vial surrounds and supports the vial with the opening of the vial above the upper end surface of the block being exposed. Therefore, the surface temperatures of a cover for the opening, the fluid introducing and discharging tubes each positioned inside the opening of the vial become lower than the temperature of the main body of the vial with the reduction of the transfer rate of heat transmitted from the supporting block. As such, a vaporized component such as an excess reagent or a solvent condenses on the cover of the opening and the walls of the fluid introducing and discharging tubes when evaporation is carried out. Thus, it is likely that the reagent which has condensed thereon and adhered thereto mixes with a next reagent or drip to a product formed in the vial when a subsequent reaction takes place.

It is therefore the object of the invention to provide a reagent reactor to prevent an exhaust gas of a vial from condensing on the opening of the vial or the cover of the opening and the walls of the fluid introducing and discharging tubes when evaporation is effected in such a manner as described above.

### Disclosure of the Invention

In order to achieve the above object, a reagent reactor according to the invention comprises:
a vial having an opening at one end thereof;
a supporting block having a first heater element, for surrounding and supporting the vial in a substantially erected posture so that the opening of the vial is adjacent to the upper surface thereof and exposed to the outside thereabove;
a cover block for pressing against the supporting block under pressure and capable of sealing the opening of the vial including a fluid introducing tube projecting from the opening into the vial when the cover block is in the sealing position to the vial, a fluid discharging opening opposed to the opening when the cover block is in the sealing position to the vial, a fluid introducing open and closed control passage, a fluid discharging open and closed control passage, the introducing and discharging passages communicating with the fluid introducing tube and the fluid discharging opening, respectively, and a second heater element; and
a temperature control circuit for controlling the first and second heater elements so as to maintain the temperatures of the upper portion of the vial and the lower end surface of the cover block which contacts the opening of the vial more than the temperature of the main body of the vial when a reagent is added to a sample contained in the vial so as to allow reaction of the reagent with the sample and when the evaporation or the azeotropy of a reagent or a solvent is performed.

According to the above construction, in sequential reactions including evaporation, the temperatures of the opening of the vial, the cover of the opening, the fluid introducing and discharging tubes, and the other associated portions are maintained to be higher than the temperature of the main body of the vial. Therefore, when a vaporized component is discharged through the fluid discharging tube, the vaporized component is discharged completely therethrough without condensing on the discharging tube and the like and the space of the vial is filled with an inert gas. As such, a subsequent reaction can take place with a high accuracy and efficiency.

### BRIEF DESCRIPTION OF THE DRAWINGS

Fig. 1 is a schematic view showing the principal constitution and passage connection of a reagent reactor according to the invention.

Fig. 2 is a perspective view showing the outer appearance of the reagent reactor according to the invention;

Figs. 3A and 3B are vertical longitudinal views showing the reagent reactor taken along the lines A-A and B-B of Fig. 2, respectively; and

Fig. 4 is an exploded sectional view showing the construction of the reagent reactor of Fig. 3B.

## Embodiment

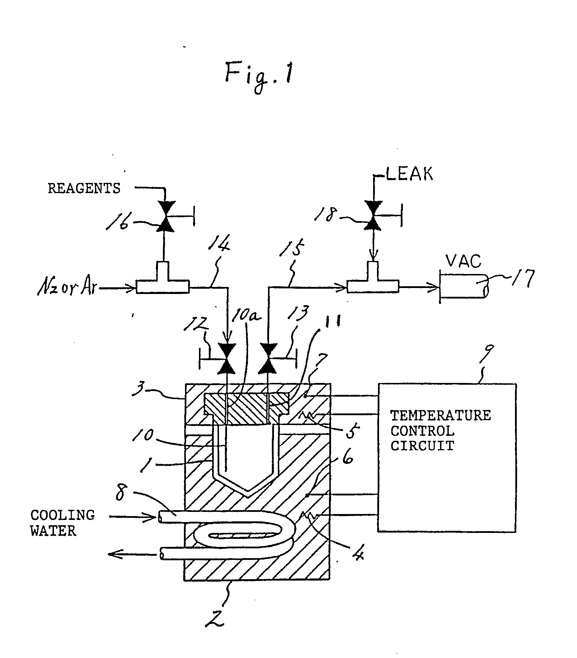

Fig. 1 schematically shows the block construction of a reagent reactor, and a fluid supply line and a fluid discharging line each connected to the reagent reactor according to an embodiment of the invention. Reference numeral 1 denotes a vial, the upper end of which is opened. Reference numeral 2 shows a supporting block which surrounds the vial 1 so as to support the main body of the vial 1. Reference numeral 3 denotes a cover block for sealing the opening of the vial 1 which is exposed to the outside from the upper surface of the supporting block 2. A heater element 4 and a temperature sensor 6 are provided in the supporting block 2. Similarly, a heater element 5 and a temperature sensor 7 are provided in the cover block 3. A cooling tube 8 is mounted in the supporting block 2 so that cooling water circulates therethrough. Except a rapid cooling by cooling liquid, the temperature of the supporting block 2 and the cover block 3 are controlled by a temperature control circuit 9 having control output lines connected to the heater elements 4 and 5 and temperature detecting lines connected to the temperature sensors 6 and 7. A fluid introducing tube 10 supported by the cover block 3 projects into the vial 1. A fluid discharging opening 11 formed in the cover block 3 is opposed to the opening of the vial 1. Describing the construction of the cover block 3, a fluid supply line 14 having a valve 12 mounted thereon is connected to a fluid introducing opening 10a communicating with the fluid introducing tube 10. Similarly, in the cover block 3, a fluid discharging line 15 having a valve 13 mounted thereon is connected to the fluid discharging opening 11. As shown in Fig. 1, inert gas $N_2$ or Ar is supplied to the vial 1 through the fluid supply line 14. Preferably, a reagent supply valve 16 is connected to the fluid supply line 14. But generally, reagents may be manually supplied to the vial 1 by taking it out of the supporting block 2 and the cover block 3. The pressure of the fluid discharging line 15 is reduced by a vacuum source 17 or the fluid discharging line 15 is opened to the atmosphere through a valve 18.

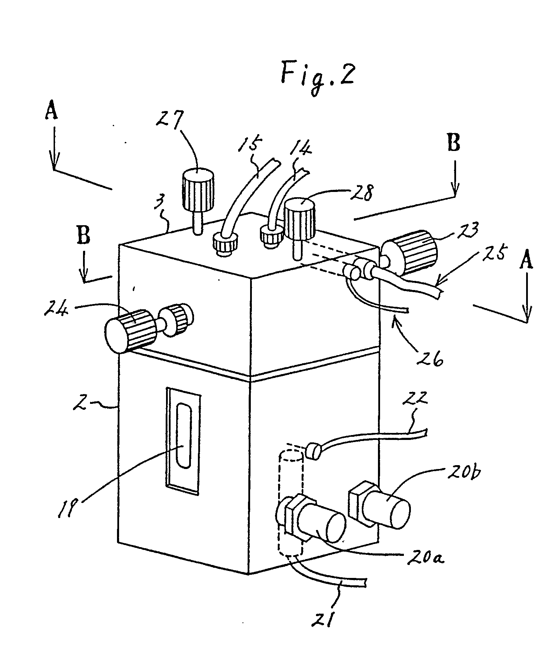

Fig. 2 is a perspective view showing the outer construction of the supporting block 2 and the cover block 3. The outer wall of the supporting block 2 is provided with a vial monitoring window 19 composed of a glass plate which is preferably flush therewith and connector projections 20a and 20b for connecting the cooling tube 8. Reference numeral 21 denotes a cable for supplying an electrical power to the heater element 4. Reference numeral 22 indicates a temperature detecting cable.

Pipes serving as the fluid supply line 14 and the fluid discharging line 15 extend from the upper surface of the cover block 3. Screw cock operating knobs 23 and 24 for opening and closing the fluid introducing opening 10a and the fluid discharging opening 11, respectively are mounted on the cover block 3 on either side thereof corresponding to the lines 14 and 15. A cable 25 for supplying an electrical power to the heater element 5 and a temperature detecting cable 26 extend from one of the sides of the cover block 3.

Knobs 27 and 28 projecting from the upper surface of the cover block 3 operate as clamping screws for pressing the cover block 3 against the supporting block 2 with pressure so as to hold the cover block 3 to the supporting block 2.

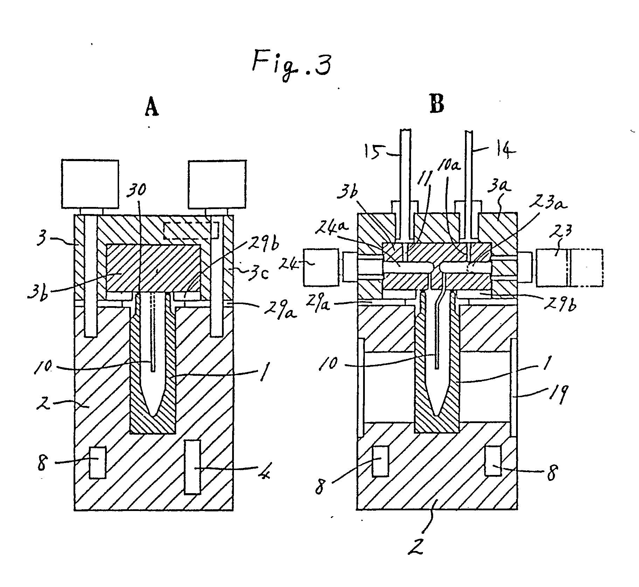

Figs. 3A and 3B are sectional views of the supporting block 2 and the cover block 3 along the lines A-A and B-B of Fig. 2, respectively. The cover block 3 is pressed against the supporting block 2 with pressure through packings 29a and 29b each composed of a Teflon plate so that the cover block 3 is supported by the supporting block 2. The cover block 3 comprises a main body 3a made of aluminum and a passage block 3b made of a synthetic resin embedded in the lower section of the main body 3a. The main body of the supporting block 2 also made of aluminum supports the vial 1 preferably made of quarts glass except the opening positioned in the upper end thereof. An O-ring 30 is mounted on the lower end surface of the passage block 3b opposed to the upper opening end of the vial 1 so as to keep the vial 1 sealed. As shown in Fig. 3B, screw cocks 23a and 24b project from the knobs 23 and 24 through the main body 3a of the cover block 3 into the passage block 3b thereof, respectively. When the screw cocks 23a and 24a have the respective most projected positions as shown by the solid lines, the screw cocks 23a and 24a completely seal the fluid introducing opening 10a and the fluid discharging opening 11, respectively as shown by the solid lines. When the screw cocks 23a and 24a have retracted from the outer wall of the cover block 3 in the most retracted positions as shown as to the cock 23a by the imaginary lines, both openings 10a and 11 are opened.

Fig. 4 shows a detailed construction of the blocks 2 and 3 by an exploded view, indicating parts constructing the blocks 2 and 3, taken along the lines B-B of Fig. 2.

## Example of reaction process

The following description is concerned with a reaction process for applying a fluorescent label to N-acetylglycosamine using the reagent reactor, according to the present invention, having the above construction.

First, as a preparatory stage, 11.06 mg of N-acetyl glucosamine is dissolved in 100 ml of water. Then, 2 $\mu$l of the N-acetylglycosamine-dissolved solution (containing 1 n more of N-acetylglucosamine) is put into the vial 1 whose capacity of 1 ml. The contents of the vial 1 are lyophilized to remove water therefrom. Thereafter, a 10$\mu$l of a solution containing pyridylaminating agent (mixture solution of acetic acid containing 23M 2-aminopyridine and methanol at the ratio of 7 : 3) is put into the vial 1 to dissolve substance therein.

(1) The supporting block 2 is heated to raise the temperature thereof to 90°C by the heater element 4 (hereinafter referred to as first heater element) of the supporting block 2. The cover block 3 is heated to raise the temperature thereof to 95°C by the heater element 5 (hereinafter referred to as second heater element) of the cover block 3.

(2) The vial 1 is set in the supporting block 2 and the cover block 3 is fixed to the supporting block 2 so as to seal the vial 1.

(3) N$_2$ is supplied to the vial 1 at a flow rate of 100 ml/min through the fluid introducing tube 10 so as to substitute a gas in the vial 1 with N$_2$.

(4) The screw cocks 23a and 24a are tightened to seal the vial 1.

(5) The contents are permitted to react for 15 minutes to pyridylaminate themselves.

(6) The fluid discharging passage is opened and the cock 23a (positioned at the fluid discharging side) is opened to flow N$_2$ through the vial 1.

(7) Cooling water is introduced into the supporting block 2 through the cooling tube 8 to reduce the temperature of the supporting block 2 to 60°C and the temperature of the cover block 3 to 65°C.

(8) The fluid discharging line is connected to only the vacuum line. The vacuum pump is actuated so that N$_2$ flows through the fluid introducing line 14 at the rate of approximately 500 ml/min. As a result, the pressure (the degree of vacuum) of the vial 1 decreases to 80 mmHg. Then, the solvent is evaporated for 30 minutes to remove the solvent from the vial 1.

(9) the pressure in the vial 1 is returned to the atmospheric pressure. Then, the cover block 3 is opened to take the vial 1 out of the supporting block 2. Thereafter, 20 $\mu$l of a reducing reagent (methanol solution containing 10% of pyridylborane) is added into the vial 1 to mix it with the contents in the vial 1.

(10) The temperature of the supporting block 2 is again increased to 90°C and the temperature of the cover block 3 is increased to 95°C.

(11) The vial 1 is returned into the supporting block 2 and the cover block 3 is fixed to the supporting block 2.

(12) N$_2$ is supplied to the vial 1 at the flow rate of 100 ml/min through the fluid introducing tube 10 so as to replace a gas in the vial 1 with N$_2$.

(13) The screw cocks 23a and 24a are tightened to seal the vial 1. Then, the contents are permitted to react for 30 minutes so as to carry out a reduction.

(14) The screw cock 24a is opened to discharge N$_2$ from the vial 1. Cooling water is introduced into the supporting block 2 through the cooling tube 8 to reduce the temperature of the supporting block 2 to 40°C and the temperature of the cover block 3 to 45°C.

(15) The vial 1 is taken out of the supporting block 2. Then, 100 $\mu$l of toluene is added to mix it with the contents of the vial 1.

(16) The vial 1 is returned to the supporting block 2. The vacuum pump is actuated to suck a gas from the vial 1. Then, N$_2$ is supplied thereto at the flow rate of approximately 500 ml/min. As a reult, the degree of vacuum of the vial 1 becomes 80mmHg. Then, the solvent is evaporated for 10 minutes to remove the solvent from the vial 1.

(17) After the pressure in the vial 1 is returned to the atmospheric pressure, the vial 1 is taken out of the supporting block 2. Then, 100 $\mu$l of toluene is added to mix it with the contents in the vial 1.

(18) The vacuum pump is actuated. N$_2$ is supplied to the vial 1 at the flow rate of approximately 500 ml/min. As a result, the degree of vacuum of the vial 1 becomes 80 mmHg. Then, the solvent is evaporated for 20 minutes to remove the solvent from the vial 1.

(19) The vial 1 is taken out of the supporting block 2 after the pressure in the vial 1 is returned to the atmospheric pressure. A product formed and contained in the vial 1 is dissolved in an appropriate amount of water so as to analyze it by a high-performance liquid chromatography (HPLC). In this measurement, the yield of fluorescence labeling of N-acetylglycosamine was 96.2%.

As apparent from the foregoing description, a solvent can be completely discharged from the vial without the solvent condensing on or adhering to the opening thereof, the cover of the opening, and the walls of the fluid introducing and discharging tubes associated with the opening of the vial, or the like portions when the solvent is removed from the vial. Therefore, an experiment can be accomplished with a high accuracy and efficiency. In addition, in each reaction stage, each gas can be prevented from condensing. Thus, the reagent reactor can be easily and stably used.

## Claims

1. A reagent reactor comprising
a vial having an opening at one end thereof;
a supporting block, having a first heater element, for surrounding and supporting said vial in a substantially erected posture so that said opening of the vial is adjacent to the upper surface thereof and exposed to the outside thereabove;
a cover block for pressing against said supporting block under pressure and capable of sealing said opening of said vial including a fluid introducing tube projecting from said opening into said vial when the cover block is in the sealing position to the vial, a fluid discharging opening opposed to said opening when the cover block is in the sealing position to the vial, a fluid introducing open and closed control passage, a fluid discharging open and closed control passage, said introducing and discharging passages communicating with said fluid introducing tube and said fluid discharging opening, respectively, and a second heater element; and
a temperature control circuit for controlling said first and second heater elements so as to maintain the temperatures of the upper portion of said vial and the lower end surface of said cover block which contacts said opening of said vial more then the temperature of the main body of said vial when a reagent is added to a sample contained in said vial so as to allow reaction of the reagent with said sample and when the evaporation or the azeotropy of a reagent or a solvent is performed.

# Fig.1

Fig.2

Fig.3